# EUROPÄISCHE PATENTSCHRIFT

(11) **EP 0 654 219 B1**
(45) Veröffentlichungstag und Bekanntmachung des Hinweises auf die Patenterteilung: **27.09.2000**
(21) Anmeldenummer: 93118589.6
(22) Anmeldetag: 18.11.1993
(51) Int. Cl.: A22B 5/16

(54) **Vorrichtung zum Enthäuten von Schlachttieren**
Carcass dehiding apparatus
Dispositif pour dépouiller un animal de boucherie

(43) Veröffentlichungstag der Anmeldung: 24.05.1995
(73) Patentinhaber: BANNS MASCHINENFABRIK GmbH & Co. KG, D-35216 Biedenkopf (DE)
(72) Erfinder: Weigel, Wilfried, D-35232 Dautphetal-Friedensdorf (DE); Runzheimer, Bernd, D-35075 Gladenbach (DE)
(74) Vertreter: Klunker . Schmitt-Nilson . Hirsch

(56) Entgegenhaltungen:
- EP-A- 0 104 117
- US-A- 4 653 149
- US-A- 4 751 768

## Beschreibung

Die Erfindung bezieht sich auf eine Vorrichtung zum Enthäuten von Schlachttierkörpen, die mindestens ein Zugglied, das an einem Hautteil des zu enthäutenden Schlachttierkörpers befestigbar ist, und eine Antriebseinrichtung zum Ausüben einer Hautabzugskraft auf das Zugglied aufweist. Eine derartige Vorrichtung ist aus US-A- 4 751 768 bekannt.

Mechanisierte Enthäutungsvorrichtungen für Schlachttierkörper sind in vielfältigen Konstruktionen bekannt. Bei einem recht weit verbreiteten Konstruktionstyp weist die Vorrichtung eine angetriebene Wickelrolle auf, auf die das Zugglied (häufig eine Kette) und in den meisten Fällen ein erheblicher Teil der Haut des Schlachttierkörpers im Verlauf des Enthäutungsvorgangs aufgewickelt wird. Meist wird die Aufwickelrolle mit konstanter Drehzahl angetrieben.

Ein derartiges Abziehen der Haut mit konstanter Geschwindigkeit führt dazu, daß die Hautabzugskraft im Verlauf des Enthäutungsvorgangs eines Schlachttierkörpers stark variiert, entsprechend dem für die diversen Körperpartien unterschiedlichen Abzugswiderstand. Infolgedessen wird an Körperpartien mit geringem Abzugswiderstand langsamer als optimal enthäutet und an Partien mit hohem Abzugswiderstand schneller als optimal enthäutet. Enthäuten mit zu geringer Abzugsgeschwindigkeit bedeutet unerwünschte Verlängerung der für das Enthäuten benötigten Gesamtzeit, und Enthäuten mit zu hoher Abzugsgeschwindigkeit bringt die Gefahr der Beschädigung der Haut oder der unter der Haut befindlichen Fleischpartien mit sich; es steht schwerlich genügend Zeit zur Verfügung, um den Enthäutungsvorgang ordnungsgemäß manuell mit Schnitten zwischen der Haut und dem restlichen Schlachttierkörper unterstützen zu können.

In den meisten Fällen werden Schlachttierkörper im hängenden Zustand enthäutet, wobei zusätzlich die Vorderfüße des Schlachttiers gehalten sein können. Die Bauteile, mit denen das betreffende Schlachttier von oben her und gegebenenfalls zusätzlich von unten her gehalten ist, wie Haken, Förderbahn und dergleichen, sind hohen Belastungen ausgesetzt, weil sie außer dem Gewicht des Schlachttiers auch noch die durch den Enthäutungsvorgang entstehenden Kräfte aufnehmen müssen. Es ist ein besonderes Problem, daß diese Bauteile, wenn sie stark wechselnden Kräften, insbesondere hohen Lastspitzen, beim Enthäutungsvorgang ausgesetzt sind, brechen können. Dies stellt eine sehr ernst zu nehmende Gefahrenquelle dar. Dies gilt ganz besonders, wenn mit einer - vom Enthäutungsvorgang her an sich günstigen - Enthäutungsrichtung unter einem ziemlich spitzen Winkel zur vertikalen Längsrichtung des Schlachttierkörpers gearbeitet wird.

Der Erfindung liegt die Aufgabe zugrunde, eine Enthäutungsvorrichtung verfügbar zu machen, welche die Durchführung des Enthäutungsvorgangs mit günstiger Geschwindigkeit und unter Vermeidung von Belastungsspitzen an den das das betreffende Schlachttier beim Enthäuten haltenden Bauteilen ermöglicht.

Zur Lösung dieser Aufgabe ist die Vorrichtung erfindungsgemäß dadurch gekennzeichnet, daß die Antriebseinrichtung lastabhängig in ihrer Arbeitsgeschwindigkeit variabel ist, wobei die Hautabzugsgeschwindigkeit bei Überschreiten eines Schwellwerts der Zugkraft der Antriebseinrichtung und vor Erreichen einer maximal zugelassenen Hautabzugskraft selbsttätig reduziert wird, so lange bis der Schwellwert wieder unterschritten ist.

Aus der EP-A-0 104 117 ist eine Enthäutungsvorrichtung, insbesondere für geschlachtete Hasen, bekannt, bei der mit rauhen Flachriemen an der fellbesetzten Haut gezogen wird. Bei Überschreiten einer bestimmten Größe der Hautabzugseinwirkung werden die Flachriemen angehalten, damit die Haut nicht reißt.

Bei der erfindungsgemäßen Enthäutungsvorrichtung kann man mit einer relativ hohen Grundgeschwindigkeit des Hautabzugs arbeiten. Wenn im Verlauf des Enthäutungsvorgangs Körperpartien erreicht werden, die schwieriger und mit höherem Hautabzugswiderstand zu enthäuten sind, stellt sich selbsttätig eine geringere Hautabzugsgeschwindigkeit ein. Jetzt bleibt für Bedienungspersonen, die Schnitte zwischen der Haut und dem restlichen Schlachttierkörper führen, um den Hautabzugsvorgang zu unterstützen, genügend Zeit. Ganz besonders wichtig ist, daß Bauteile, insbesondere obere Aufhängteile für das jeweilige Schlachttier, nicht mehr Spitzenbelastungen ausgesetzt werden können, für die sie nicht ausgelegt sind. Hiermit ist sichergestellt, daß diese Bauteile nicht mehr unter der Belastung des Hautabzugsvorgangs brechen können.

Es wird darauf hingewiesen, daß die Erfindung bei Enthäutern beliebigen Funktionsprinzips verwirklicht sein kann, also nicht auf Enthäuter beschränkt ist, die mit einer Aufwickelrolle für das Zugglied arbeiten.

Vorzugsweise ist die Enthäutungsvorrichtung so ausgebildet, daß die Hautabzugsgeschwindigkeit selbsttätig bis auf Null reduzierbar ist.

Wenn die erfindungsgemäße Vorrichtung mit einer Aufwickelrolle für das Zugglied arbeitet, ist vorzugsweise der Antriebsmotor der Aufwickelrolle lastabhängig in seiner Drehzahl variabel. Ein Maß für die Belastung des Antriebsmotors ist insbesondere das von ihm gerade abgegebene Drehmoment oder die Zugkraft in dem Zugglied oder die an oberen Aufhänge-Bauelementen vorhandene Zugkraft (hinausgehend über das Eigengewicht des jeweiligen Schlachttiers).

Als Antriebsmotor kommt vorzugsweise ein Elektromotor, aber auch ein Hydraulikmotor in Betracht. Bei einem Elektromotor ist das jeweils erzeugte Drehmoment im wesentlichen proportional dem aufgenommenen Strom. Mit einem Strombegrenzer läßt sich deshalb auf einfache Weise das von dem Elektromotor erzeugte Drehmoment begrenzen. Man kann mit einem Elektromotor arbeiten, der über einen Frequenzumformer gespeist wird. Mittels des Frequenzümformers läßt sich die Drehzahl des Elektromotors auf einfache Weise reduzieren, wenn das von dem Elektromotor abgegebene Drehmoment unerwünscht groß wird oder sich einem maximal zugelassenen Drehmoment nähert. Dieser Steuervorgang bzw. Regelvorgang läßt sich in mehreren Stufen oder auch stufenlos durchführen, wobei ein drehzahländernder Eingriff ab Überschreiten eines Schwellenwerts des abgegebenen Drehmoments erfolgt.

In bevorzugter Ausgestaltung der Erfindung ist die Enthäutungsvorrichtung dadurch gekennzeichnet, daß eine Zugglied-Aufwickelrolle und/oder eine Umlenkrolle für das Zugglied vorgesehen ist; daß die Antriebseinrichtung einen Antrieb zum Verfahren der Aufwickelrolle und/oder der Umlenkrolle aufweist; und daß dieser Antrieb lastabhängig in seiner Arbeitsgeschwindigkeit variabel ist. Mit der Verfahrbewegung der Aufwickelrolle und/oder der Umlenkrolle hat man ein Mittel zur Verfügung, den Hautabzugswinkel relativ zur Längsachse des Schlachttiers jeweils optimal an die gerade zu enthäutende Schlachttierpartie anzupassen. Da das Verfahren der Aufwickelrolle und/oder der Umlenkrolle ebenfalls eine Hautabzugskraft erzeugt, ist es in Weiterbildung der Erfindung bevorzugt, die Arbeitsgeschwindigkeit dieses Antriebs lastabhängig zu variieren, insbesondere in Abhängigkeit von der von dem Antrieb gelieferten Kraft oder von der Hautabzugskraft oder von der Belastung der den Schlachttierkörper haltenden Bauteile.

Der Antrieb für die Verfahrbewegung der Aufwickelrolle und/oder der Umlenkrolle ist vorzugsweise ein Elektromotor. Die weiter vorn im Zusammenhang mit einem Elektromotor als Antriebsmotor für die Zugglied-Aufwickelrolle geschilderten Gesichtspunkte und die dort beschriebenen, bevorzugten Weiterbildungsmerkmale gelten auch hinsichtlich des Verfahrantriebs.

Alternativ ist es bevorzugt, den Verfahrantrieb als hydraulische Zylinder-Kolben-Einheit auszubilden. Bei hydraulischen Antrieben - sei es für die Zugglied-Aufwickelrolle, sei es für den Verfahrantrieb für die Aufwickelrolle und/oder die Umlenkrolle - läßt sich eine lastabhängige Reduzierung der Arbeitsgeschwindigkeit besonders einfach durch ein Überströmventil bzw. Entlastungsventil erreichen.

In Weiterbildung der Erfindung ist es bevorzugt, daß eine Kraftmeßeinrichtung zum Erfassen der Hautabzugskraft oder der beim Halten des betreffenden Schlachttierkörpers beim Enthäuten existierenden Haltekraft vorgesehen ist, und daß das Signal der Kraftmeßeinrichtung der Antriebseinrichtung zugeführt wird. Das Signal der Kraftmeßeinrichtung stellt eine umfassende Basis zur Steuerung der Funktion der Zugkraftbegrenzug der Antriebseinrichtung dar. Man kann beispielsweise einen Abschnitt der Förderbahn, an dem das gerade zu enthäutende Schlachttier hängt, kräftemäßig von der Förderbahn davor und dahinter trennen und die Kraftmeßeinrichtung diesem Förderbahnabschnitt zuordnen. Geeignete Kraftmeßeinrichtungen sind insbesondere Dehnungsmeßstreifen, Meßwertgeber mit Piezoquarzen und dergleichen.

Gegenstand der Erfindung ist es ferner, die Drehzahl des Antriebsmotors einer Zugglied-Aufwickelrolle und/oder die Antriebsgeschwindigkeit eines Antriebs zum Verfahren einer Zugglied-Aufwickelrolle und/oder einer Zugglied-Umlenkrolle programmgesteuert variabel zu machen. Auf diese Weise lassen sich die Geschwindigkeit der Enthäutung und der Hautabzugswinkel relativ zur Längsachse des Schlachttiers optimal an die Schlachttierkörperpartie anpassen, die jeweils gerade enthäutet wird. Die Drehzahl des Antriebsmotors der Aufwickelrolle und/oder die Antriebsgeschwindigkeit des Verfahrantriebs kann während des programmgesteuerten Ablaufs jeweils zeitweise Null sein.

Nachfolgend wird anhand der Zeichnungen eine erfindungsgemäße Vorrichtung näher erläutert. Es zeigen:
- **Fig. 1**: eine erfindungsgemäße Vorrichtung;
- **Fig. 2**: einen möglichen Ablauf des Enthäutens;
- **Fig. 3**: ein Flußdiagramm zum Betrieb der erfindungsgemäßen Vorrichtung.

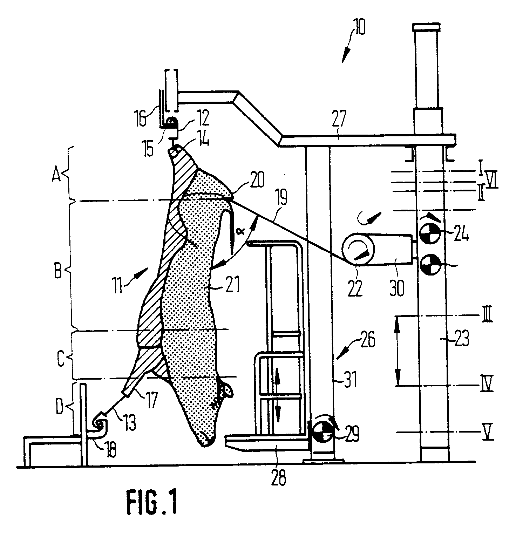

**Fig. 1** zeigt eine Enthäutevorrichtung 10, die - wie in **Fig. 1** beispielhaft dargestellt - zur Enthäutung eines Rinderkörpers 11 eingesetzt wird. Der Rinderkörper 11 ist für die Enthäutung durch Rollhaken 12, 13 in der Vorrichtung fixiert. Hierzu sind die Rollhaken 12 in die Sprunggelenke 14 der Hinterläufe des Rinderkörpers 11 eingesetzt und werden von einer Rohrbahn 15 gehalten, die über Tragkonsolen 16 an der Schlachthofdecke bzw. am Schlachtförderer befestigt ist. Die Fixierung der Vorderläufe des Rinderkörpers 11 erfolgt über Fußketten, die mit den Rollhaken 13 verbunden sind. Die Rollhaken 13 werden von einem Widerlager 18 gehalten.

Zum Enthäuten des Rinderkörpers 11 sind zwei, jeweils im Bereich der hinteren Sprunggelenke 14 angesetzte Enthäutungsketten 19 vorgesehen, die jeweils mit einer hier nicht näher dargestellten Schlingenöse an einem Hautzipfel 20 der Tierhaut 21 befestigt sind und durch einen Kettenantrieb 22, der hier als Enthäutungsrolle ausgebildet ist, eine Zugkraft zu beiden Seiten des Rinderkörpers 11 auf die Tierhaut 21 ausüben. Die Enthäutungsrolle 22 ist längs einem Führungsrahmen 23 der Vorrichtung 10 verfahrbar. Hierzu sind bei dem in **Fig. 1** dargestellten Ausführungsbeispiel an dem Kettenantrieb bzw. der Enthäutungsrolle 22 zwei Zahnräder 24, 25 vorgesehen, von denen eins, hier das Zahnrad 24, angetrieben ist, und die in einer hier nicht näher dargestellten Zahnstange des Führungsrahmens 23 kämmen. Das Zahnrad 24 ist Bestandteil eines Verstellantriebs 30, der ein Auf-und-ab-Fahren des Kettenantriebs 22 längs der Führungsrahmens 23 ermöglicht. Alternativ ist es auch möglich, den Verstellantrieb durch pneumatisch oder hydraulisch betätigte Kolben-Zylinder-Einheiten zu realisieren. Hierbei erweist es sich als vorteilhaft, wenn die für die Steuerung des nachfolgend geschilderten programmablaufs notwendigen Rückmeldungen betreffend die Verfahrstellung und die Verfahrgeschwin-digkeit des Verstellantriebs über Wegaufnehmer bzw. Geschwindigkeitsgeber erfolgen.

Zwischen dem Rinderkörper 11 und dem Führungsrahmen 23 ist ein weiterer Führungsrahmen 26 angeordnet und mit dem Führungsrahmen 23 über ein Vorrichtungsjoch 27 verbunden. Der Führungsrahmen 26 dient zur Längsführung zweier, in der vorliegenden Darstellung hintereinanderliegend angeordneter, Hubpodeste 28 längs zweier in **Fig. 1** hintereinanderliegenden Verfahrsäulen 31, auf denen sich während des Enthäutevorgangs Schlachthofpersonal befindet, das das Abziehen der Haut durch Hinterschneiden der Haut mit Messern unterstützt. Die Hubpodeste 28 sind mit einem Hubantrieb 29 versehen, der es dem schlachthofpersonal ermöglicht, während des Enthäutevorgangs immer auf gleicher Höhe mit dem Körperabschnitt des Rinderkörpers 11 zu sein, von dem Haut gerade abgelöst wird.

Bei dem in **Fig. 1** dargestellten Ausführungsbeispiel ist der Rinderkörper 11 sowohl an seinen Hinterläufen als auch an seinen Vorderläufen durch Rollhaken 12, 13 fixiert, so daß sich die durch den Kettenantrieb 22 der Enthäutungskette 19 beim Enthäuten auf den Rinderkörper 11 aufgebrachte Zugbelastung auf insgesamt vier Rollhaken 12, 13 verteilt. Die unteren Rollhaken 13 dienen jedoch im wesentlichen dazu, ein seitliches Ausschwenken des Rinderkörpers 11 in Richtung auf den Kettenantrieb 22 zu verhindern. Darüber hinaus wird durch die Vierpunkt-Festlegung des Rinderkörpers 11 eine Streckung desselben zur Vereinfachung des Enthäutevorgangs erreicht.

Bei der erfindungsgemäßen Vorrichtung sind für den Kettenantrieb 22 und den Verstellantrieb 30 nicht näher dargestellte elektrische Antriebsmotoren vorgesehen, die sowohl hinsichtlich ihrer Drehzahl als auch hinsichtlich ihrer Drehrichtung von einem den Bewegungsablauf vorgebenden Programm gesteuert werden. Wegen der in der Praxis besonders einfachen Handhabung ist für die Programmsteuerung der Antriebsmotoren eine speicherprogrammierbare Steuerung (SPS) vorgesehen, die die Drehzahl und die Drehrichtung der Antriebsmotoren als veränderbare Parameter aufweist. Zur Steuerung des Programmablaufs dienen in Abhängigkeit von dem jeweils zu enthäutenden Tier, etwa Rind, Kalb oder Bulle, festgelegte Schaltpunkte, die es ermöglichen, bezüglich der durch das Programm vorgegebenen Drehzahl- und Drehrichtungswerte für die Antriebsmotoren in Abhängigkeit von bestimmten Körperabschnitten zu differenzieren.

Zur näheren Erläuterung wird nachfolgend beispielhaft ein möglicher Programmablauf eines Enthäutevorgangs beim Enthäuten eines Rinderkörpers ausführlich dargestellt:

Die Enthäutungsrolle 22 ist mit einer nicht näher dargestellten Wegaufnehmereinrichtung versehen, die eine eindeutige Identifizierung der Lage der Enthäuterolle am Führungsrahmen 23 ermöglicht. Vor dem Start des Enthäuteprogramms werden Schaltpunkte I bis VI vorgegeben, die bestimmten Positionen am Führungsrahmen 23 entsprechen. Bei Ablauf des Programms führt dies dazu, daß bei Erreichen einer solchen durch einen Schaltpunkt vorgegebenen Position diese durch die Wegaufnehmereinrichtung oder einen Näherungschalter identifiziert wird und eine entsprechende Änderung der Drehzahl- und/oder Drehrichtungsparameter des Steuerprogramms erfolgt.

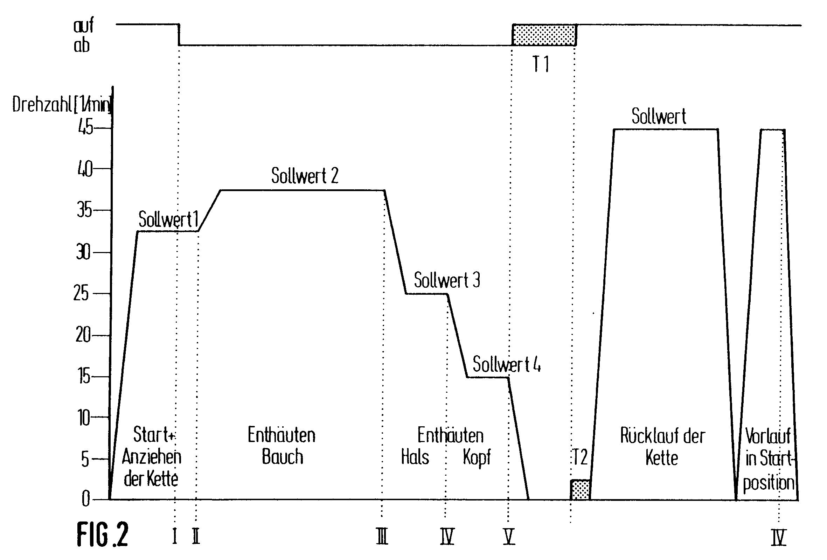

Der Programmablauf ist schematisch in **Fig. 2** dargestellt. Auf der Abszisse sind die Schaltpunkte I bis VI aufgetragen und auf der Ordinate die Drehzahl des Antriebsmotors für den Kettenantrieb bzw. die Enthäutungsrolle 22. Desweiteren ist im oberen Teil der Darstellung die Umschaltung der Drehrichtung des Antriebsmotors für den Verstellantrieb 30 dargestellt, aus dem eine entsprechende Auf-und-Ab-Bewegung des Kettenantriebs bzw. der Enthäutungsrolle 22 resultiert. Zur Vereinfachung der Darstellung und zum leichteren Verständnis des Programmablaufs ist bei dem in **Fig. 2** dargestellten, beispielhaften programmablauf auf eine Veränderung der Drehzahl des Antriebsmotors für den Verstellantrieb 30 während der Auf-und-Ab-Bewegung verzichtet worden. Das gleiche gilt für die Möglichkeit der Drehrichtungsänderung des Kettenantriebs 22. Für die Praxis erweist es sich jedoch als vorteilhaft, eine Drehrichtungsänderung des Kettenantriebs 22 vorzusehen, da hierdurch eine Änderung des in **Fig. 1** beispielhaft für den Bauchbereich des Schlachttiers dargestellten Enthäutungswinkel α möglich ist. Durch ein Nachlassen der Enthäutungskette 19, also ein zeitweiliges Umschalten der Enthäutungsrolle 22 beim Enthäutungsvorgang vom Vorlauf auf den Rücklauf bei gleichzeitiger Fortsetzung der Abfahrbewegung des Verstellantriebs 30, läßt sich nämlich der Enthäutewinkel α beispielsweise auf einfache Art und Weise verkleinern.

Nach dem manuellen Vorenthäuten der Vorder- und Hinterläufe sowie der Bauchpartie und des Kehlbereichs des Rinderkörpers 11 werden die Enthäutungsketten 19 an die Hautzipfel 20 angehängt und der in seiner obersten Position angeordnete Kettenantrieb 22 in Vorlaufrichtung mit einem vorgegebenen Drehzahlwert (Sollwert 1) gestartet. Bei Straffung der Enthäutungsketten 19 erfolgt im Schaltpunkt I der Start des Verstellantriebs 30, und die Enthäutungsrolle 22 bewegt sich ausgehend von der Position I nach unten. Bis zum Erreichen des Schaltpunkts II erfolgt dabei das Enthäuten des Hinterschinkenbereichs A des Rinderkörpers 11. Bei Erreichen des Schaltpunkts II durch die Enthäutungsrolle 22 wird die Drehzahl des Kettenantriebs auf den Sollwert 2 für die Enthäutung im Bauchbereich B erhöht. Bei Erreichen des Schaltpunkts III erfolgt eine Absenkung der Drehzahl auf den Sollwert 3 für die Enhäutung im Halsbereich C, und beim Erreichen des Schaltpunkts IV eine weitere Absenkung der Drehzahl auf den Sollwert 4 für die Enthäutung im Kopfbereich. Nach Ablauf einer vorgegebenen Zeitverzögerung T1 schaltet der Verstellantrieb 30 zur Auf-Bewegung die Drehrichtung um, so daß die Enthäutungsrolle bzw. der Kettenantrieb 22 nach oben verfahren werden. Nach der Drehrichtungsumschaltung des Verstellantriebs 30 und einer weiteren Zeitverzögerung T2 wird die Drehrichtung des Kettenantriebs 22 auf Rücklauf mit einer dem Sollwert 5 entsprechenden Drehzahl geschaltet, damit die zusammen mit den Enthäutungsketten 19 auf die Enthäutungsrolle aufgewickelte Tierhaut von dieser abgenommen werden kann. Nach erfolgter Abwicklung der Enthäutungsketten 19 erfolgt mit der gleichen, dem Sollwert 5 entsprechenden Drehzahl des Kettenantriebs 22 ein Vorlauf, also ein Aufwickeln der Enthäutungsketten, auf die Enthäutungsrolle 22 so weit, daß bei einem nachfolgenden Rinderkörper die Enthäutungsketten 19 wieder an einem Hautzipfel 20 befestigt werden können. Anschließend erfolgt beim Schaltpunkt VI, der bei der Auf-Bewegung des Kettenantriebs 22 dem Schaltpunkt I vorgeordnet ist, eine Umschaltung auf die dem Sollwert 1 entsprechende Drehzahl, mit der der Start eines erneuten Programmablaufs beim Schaltpunkt I dann erfolgen kann.

Der beschriebene optimierte Kraftansatz mit einer körperabschnittspezifischen Ausrichtung der Enthäutungsketten 19 führt insgesamt dazu, daß das Enthäuten schneller und mit geringeren Enthäutungskräften durchführbar ist. Dies führt wiederum zu einer geringeren Belastung der Befestigungspunkte für den Schlachttierkörper, also etwa der Rollhaken 12, 13, so daß diesbezüglich ein Bauteilversagen weitestgehend vermieden werden kann.

Eine noch weitergehende Sicherheit gegen Bauteilversagen wird dadurch erreicht, daß, wie weiter oben bereits beschrieben, eine mit Frequenzumformern, die zur Steuerung der Drehzahl der Antriebsmotoren des Kettenantriebs 22 und des Verstellantriebs 30 dienen, zusammenwirkende Strombegrenzungseinrichtung vorgesehen ist. Eine andere Möglichkeit, die Sicherheit gegen Bauteilversagen noch weiter zu erhöhen, besteht darin, wie ebenfalls obenstehend bereits erläutert, das Rohrbahnstück 15, an dem die Rollhaken 12 angreifen, kräftemäßig von der übrigen Rohrbahn zu entkoppeln und in diesem Rohrbahnstück eine Kraftmeßeinrichtung vorzusehen, die ein Ausgangssignal liefert, das zur Reduzierung der Drehzahl auf die Frequenzumformer der Antriebsmotoren des Kettenantriebs 22 und des Verstellantriebs 30 schaltbar ist.

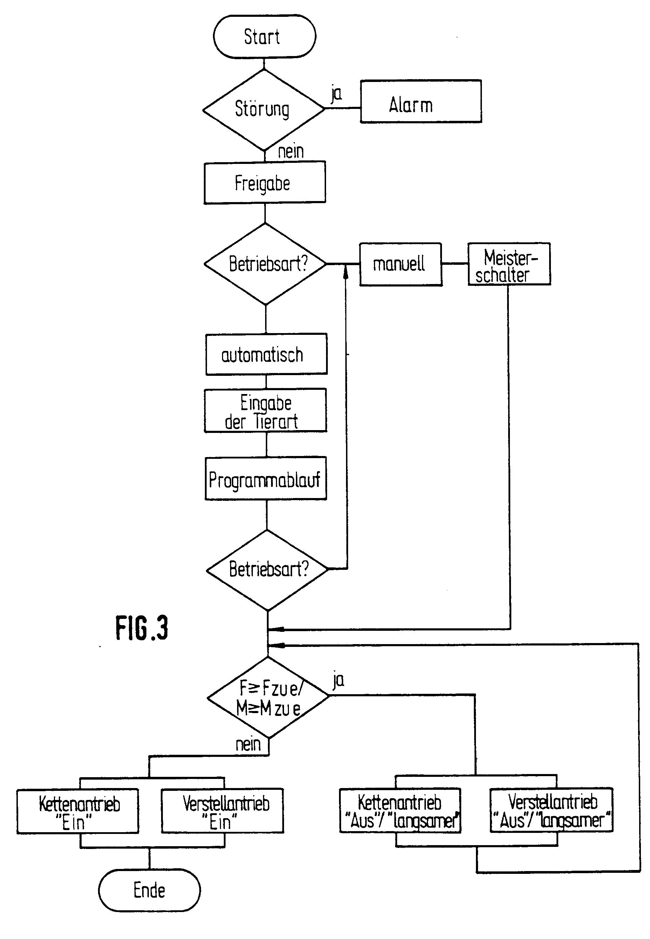

In **Fig. 3** ist anhand eines Flußdiagramms die vorstehend beschriebene Einrichtung zur Verhinderung eines Bauteilversagens noch einmal etwas plastischer dargestellt.

Wie aus **Fig. 3** zu ersehen ist, ist die Absicherungseinrichtung in den programmablauf integriert.

Nach der Inbetriebnahme der Enthäutevorrichtung erfolgt zunächst eine Störungsabfrage, nach der zwischen manueller, über einen sogenannten Meisterschalter erfolgender Steuerung und automatischer, nämlich mittels des beschriebenen Programmablaufs erfolgender Steuerung, gewählt werden kann. Bei Wahl des automatischen Programmablaufs muß nun die Eingabe der zu enthäutenden Tierart erfolgen, damit die beschriebenen Schaltpunkte durch das Programm festgelegt werden können. Danach erfolgt der eigentliche Programmablauf.

Bei Fortsetzung des Automatikbetriebs kommt schließlich die beschriebene Einrichtung zur Absicherung gegen Bauteilversagen zum Einsatz. Kriterium hierfür ist, wie bereits beschrieben, das Überschreiten einer zulässigen Zugkraft bzw. eines zulässigen Drehmomentes. Hardwaremäßig wird hierzu eine bekannte Strombegrenzungseinrichtung eingesetzt. Solange der gemessene Stromwert unter dem vorgegebenen Schwellwert der Strombegrenzungseinrichtung liegt, wird sowohl der Kettenantrieb als auch der Verstellantrieb bis zum Ende des Programmablaufs aufrechterhalten. Wird hingegen der Schwellwert der Strombegrenzungseinrichtung erreicht, erfolgt mit Hilfe einer entsprechenden Regelung eine Verringerung der Drehzahl der Antriebsmotoren, so lange bis der Schwellwert wieder unterschritten ist. Die Regelung kann bis zum Stop des Kettenantriebs und des Verstellautriebs gehen.

## Patentansprüche

1. Vorrichtung zum Enthäuten von Schlachttierkörpern, die mindestens ein Zugglied (19), das an einem Hautteil des zu enthäutenden Schlachttierkörpers (11) befestigbar ist, und eine Antriebseinrichtung (22, 30) zum Ausüben einer Hautabzugskraft auf das Zugglied (19) aufweist,
**dadurch gekennzeichnet**,
daß die Antriebseinrichtung (22, 30) lastabhängig in ihrer Arbeitsgeschwindigkeit variabel ist, wobei die Hautabzugsgeschwindigkeit bei Überschreiten eines Schwellwerts der Zugkraft der Antriebseinrichtung (22, 30) und vor Erreichen einer maximal zugelassenen Hautabzugskraft selbsttätig reduziert wird, so lange bis der Schwellwert wieder unterschritten ist.

2. Vorrichtung nach Anspruch 1,
**dadurch gekennzeichnet**,
daß die Hautabzugsgeschwindigkeit selbsttätig bis auf Null reduzierbar ist.

3. Vorrichtung nach Anspruch 1 oder 2,
**dadurch gekennzeichnet**,
daß die Antriebseinrichtung einen Antriebsmotor für eine Hautaufwickelrolle (22) aufweist und daß dieser Antriebsmotor lastabhängig in seiner Drehzahl variabel ist.

4. Vorrichtung nach Anspruch 3,
**dadurch gekennzeichnet**,
daß der Antriebsmotor ein Elektromotor ist, der vorzugsweise mit einem Strombegrenzer und einem Frequenzumformer zur Drehzahlvariation versehen ist.

5. Vorrichtung nach einem der Ansprüche 1 bis 4,
**dadurch gekennzeichnet**,
daß eine Zugglied-Aufwickelrolle (22) und/oder eine Umlenkrolle für das Zugglied (19) vorgesehen ist; daß die Antriebseinrichtung einen Antrieb (30) zum Verfahren der Zugglied-Aufwickelrolle (22) und/oder der Umlenkrolle aufweist; und daß dieser Antrieb (30) lastabhängig in seiner Arbeitsgeschwindigkeit variabel ist.

6. Vorrichtung nach Anspruch 5,
**dadurch gekennzeichnet**,
daß der Antrieb (30) ein Elektromotor ist, der vorzugsweise mit einem Strombegrenzer und einem Frequenzumformer zur Drehzahlvariation versehen ist.

7. Vorrichtung nach Anspruch 5,
**dadurch gekennzeichnet**,
daß der Antrieb eine hydraulische Zylinder-Kolben-Einheit ist.

8. Vorrichtung nach einem der Ansprüche 1 bis 7,
**dadurch gekennzeichnet**,
daß eine Kraftmeßeinrichtung zum Erfassen der Hautabzugskraft oder der beim Halten des betreffenden Schlachttierkörpers (11) beim Enthäuten existierenden Haltekraft vorgesehen ist; und daß das Signal der Kraftmeßeinrichtung der Antriebseinrichtung (22,30) zugeführt wird.

9. Vorrichtung nach Anspruch 8,
**dadurch gekennzeichnet**,
daß die Kraftmeßeinrichtung an einem Abschnitt einer Förderbahn (15) vorgesehen ist, an der die Schlachttierkörper (11) hängen.

10. Vorrichtung nach einem der Ansprüch 3 bis 9,
**dadurch gekennzeichnet**,
daß die Drehzahl des Antriebsmotors im Verlauf eines Enthäutungsvorgangs programmgesteuert variabel ist.

11. Vorrichtung nach einem der Ansprüche 5 bis 10,
**dadurch gekennzeichnet**,
daß die Antriebsgeschwindigkeit des Antriebs (30) im Verlauf eines Enthäutungsvorgangs programmgesteuert variabel ist.

## Claims

1. A carcass dehiding apparatus comprising at least one pulling member (19) adapted to be attached to a hide portion of the carcass (11) to be dehided, and a drive means (22, 30) for exerting a hide stripping force on said pulling member (19),
characterized in that said drive means (22, 30) is variable in its operating speed in load-dependent manner, the hide stripping speed, when a threshold value of the pulling force of the drive means (22, 30) is exceeded and before a maximum permissible hide stripping force is reached, being reduced automatically until the threshold value is fallen short of again.

2. The apparatus of claim 1,
characterized in that the hide stripping speed can be reduced automatically down to zero.

3. The apparatus of claim 1 or 2,
characterized in that the drive means comprises a drive motor for a hide wind-up roller (22) and in that this drive motor is variable in its speed in load-dependent manner.

4. The apparatus of claim 3,
characterized in that the drive motor is an electric motor that is preferably provided with a current limiter and a frequency converter for speed variation.

5. The apparatus of any of claims 1 to 4,
characterized in that there is provided a pulling member wind-up roller (22) and/or a deflection roller for said pulling member (19); that the drive means comprises a drive (30) for moving the pulling member wind-up roller (22) and/or the deflection roller; and in that said drive (30) is variable in its operating speed in load-dependent manner.

6. The apparatus of claim 5,
characterized in that said drive (30) is an electric motor that is preferably provided with a current limiter and a frequency converter for speed variation.

7. The apparatus of claim 5,
characterized in that said drive is a hydraulic piston and cylinder unit.

8. The apparatus of any of claims 1 to 7,
characterized in that there is provided a force measuring means for sensing the hide stripping force or the holding force present in holding the particular carcass (11) during dehiding; and in that the signal of said force measuring means is fed to the drive means (22, 30).

9. The apparatus of claim 8,
characterized in that the force measuring means is provided on a section of a conveying path (15) from which the carcasses (11) are suspended.

10. The apparatus of any of claims 3 to 9,
characterized in that the speed of the drive motor is variable in program-controlled manner in the course of a dehiding operation.

11. The apparatus of any of claims 5 to 10,
characterized in that the driving speed of said drive (30) is variable in program-controlled manner in the course of a dehiding operation.

## Revendications

1. Dispositif pour dépouiller des corps d'animaux de boucherie, qui comporte au moins un organe de traction (19), lequel peut être fixé à une partie de la peau du corps (11) à dépouiller, ainsi qu'un dispositif d'entraînement (22, 30) destiné à exercer une force d'enlèvement de la peau sur l'organe de traction (19), caractérisé en ce que la vitesse de travail du dispositif d'entraînement (22, 30) est variable en fonction de la charge, la vitesse d'enlèvement de la peau étant automatiquement réduite dans le cas où est dépassée une valeur seuil de la force de traction du dispositif d'entraînement (22, 30) et avant que ne soit atteinte une force maximale admissible d'enlèvement de la peau, jusqu'à ce que l'on passe à nouveau au-dessous de la valeur seuil.

2. Dispositif selon la revendication 1, caractérisé en ce que la vitesse d'enlèvement de la peau peut être automatiquement réduite jusqu'à zéro.

3. Dispositif selon la revendication 1 ou 2, caractérisé en ce que le dispositif d'entraînement comporte un moteur d'entraînement pour une bobine d'enroulement de la peau (22) et en ce que ce moteur d'entraînement a une vitesse qui varie en fonction de la charge.

4. Dispositif selon la revendication 3, caractérisé en ce que le moteur d'entraînement est un moteur électrique qui est doté de préférence d'un limiteur de courant ainsi que d'un convertisseur de fréquence pour la variation de la vitesse de rotation.

5. Dispositif selon l'une des revendications 1 à 4, caractérisé en ce qu'il est prévu une bobine d'enroulement de l'organe de traction (22) et/ou un rouleau de renvoi pour l'organe de traction (19), en ce que le dispositif d'entraînement comporte un entraînement (30) destiné à déplacer la bobine d'enroulement de l'organe de traction (22) et/ou du rouleau de renvoi, et en ce que la vitesse de travail de cet entraînement (30) varie en fonction de la charge.

6. Dispositif selon la revendication 5, caractérisé en ce que l'entraînement (30) est un moteur électrique qui est doté de préférence d'un limiteur de courant et d'un convertisseur de fréquence pour la variation de la vitesse de rotation.

7. Dispositif selon la revendication 5, caractérisé en ce que l'entraînement est une unité hydraulique à cylindre et piston.

8. Dispositif selon l'une des revendications 1 à 7, caractérisé en ce qu'il est prévu un dispositif de mesure de la force destiné à enregistrer la force d'enlèvement de la peau ou la force de maintien qui existe lorsque le corps (11) de l'animal de boucherie concerné est maintenu pendant qu'on le dépouille, et en ce que le signal du dispositif de mesure de force est envoyé au dispositif d'entraînement (22, 30).

9. Dispositif selon la revendication 8, caractérisé en ce que le dispositif de mesure de force est prévu sur un tronçon d'une voie de transport (15) à laquelle sont suspendus les corps (11) des animaux de boucherie.

10. Dispositif selon l'une des revendications 3 à 9, caractérisé en ce que la vitesse de rotation du moteur d'entraînement varie de manière programmée au cours d'une opération de dépouillement.

11. Dispositif selon l'une des revendications 5 à 10, caractérisé en ce que la vitesse d'entraînement (30) varie de manière programmée au cours d'une opération de dépouillement.
